# EUROPÄISCHE PATENTANMELDUNG

(11) **EP 2 081 290 A2**
(43) Veröffentlichungstag der Anmeldung: **22.07.2009**
(21) Anmeldenummer: 09000347.6
(22) Anmeldetag: 13.01.2009
(51) Int. Cl.: H02P 7/28

(54) **Elektrorollstuhlantrieb**

(30) Priorität: 17.01.2008 DE 102008004835
(71) Anmelder: MEYRA WILHELM MEYER GMBH & CO. KG, D-32689 Kalletal-Kalldorf (DE)
(72) Erfinder: Busche, Klaus, 32602 Vlotho (DE)
(74) Vertreter: Weber, Joachim

(57) **Zusammenfassung**

Die Erfindung betrifft einen Elektrorollstuhlantrieb mit einem bürstenbehafteten DC Motor, wobei der bürstenbehaftete DC Motor mindestens vier Pole aufweist und mindestens zwei Polpaare des bürstenbehafteten DC Motors dauerhaft an je einer unabhängigen Leistungsstufe betrieben werden.

## Beschreibung

Die vorliegende Erfindung betrifft einen Elektrorollstuhlantrieb mit einem bürstenbehafteten DC (Gleichstrom) Motor.

Vorbekannt sind mehrpolige bürstenbehaftete DC Motoren mit entsprechend dauerhaft verschalteten Polpaaren, die an einer gemeinsamen Leistungsstufe (Vollbrücke oder Halbbrücke) betrieben werden.

Aus der WO 96/03798 ist ein mehrpoliger bürstenbehafteter DC Motor, welcher abhängig von Bedarf und Last geschaltet werden kann, bekannt. Den Poolpaaren des Motors ist eine elektronische Schaltung vorgeschaltet, welche einzelne Polpaare mit ihren Bürsten über steuerbare Schalter an die Versorgungsspannung zu- bzw. abschaltet.

Ferner bekannt sind mehrpolige DC Motoren (speziell dreiphasige Motoren), wobei eine jeweils zugeordnete Leistungsstufe die Wicklungen der Motoren so ansteuert, dass ein mehrphasiger Wechselstrom erzeugt wird (bürstenlose DC Motoren). Des Weiteren vorbekannt sind mehrpolige bürstenlose DC Motoren, zu deren Betrieb jeweils zugeordnete Leistungsstufen die Wicklungen so ansteuern, dass ein gepulster Gleichstrom erzeugt wird (Schrittmotoren).

Es ist daher Aufgabe der vorliegenden Erfindung, einen Elektrorollstuhlantrieb bereitzustellen, welche bei einfachem und kostengünstigem Aufbau eine sichere, sparsame und komfortable Steuerung ermöglicht.

Diese Aufgabe wird durch einen Elektrorollstuhlantrieb mit den Merkmalen des Anspruchs 1 gelöst. Die Unteransprüche zeigen bevorzugte Weiterbildungen der Erfindung.

Der erfindungsgemäße Elektrorollstuhlantrieb mit einem bürstenbehafteten DC Motor, wobei der bürstenbehaftete DC Motor mindestens vier Pole aufweist, ist dadurch gekennzeichnet, dass mindestens zwei Polpaare des bürstenbehafteten DC Motors dauerhaft an je einer unabhängigen Leistungsstufe betrieben werden. Dies ermöglicht durch die erfindungsgemäße Aufteilung der Gesamtleistung auf mehrere Leistungsstufen eine Verringerung der Verlustleistung pro Kabelstrang und Leistungsstufe.

Ein weiterer Vorteil der erfindungsgemäßen Verwendung mehrerer Leistungsstufen ist die daraus resultierende Redundanz in der Steuerung. Ist beispielsweise eine Leistungsstufe funktionsunfähig, so bleibt mindestens noch eine zweite Leistungsstufe zur Sicherstellung des Antriebs (Notlaufeigenschaft). Gleiches gilt bei Funktionsausfall einer Bürste bzw. eines Polpaares. Prinzipbedingt kann eine Überlastung des verbleibenden Polpaares verhindert werden

Eine vorteilhafte Ausführungsform der Erfindung sieht zumindest für zwei Polpaare je eine Strom-Messstelle zur Regelung bzw. Limitierung der jeweiligen Phasenströme vor. Dies ermöglicht eine genaue Regelung der einzelnen Leistungsstufen.

Besonders bevorzugt ist eine Einrichtung zur Erkennung und Auswertung einer Störungssituation (z.B. Unterbrechung bzw. Kurzschluss) in der elektronischen Steuerung. Diese ermöglicht eine angemessene, automatische Reaktion der Steuerung, z.B. die Notabschaltung des betroffenen Stromkreises oder der Übergang in eine Betriebsart mit verminderter Antriebsleistung (Notlauffunktion). Somit kann das Risiko von Folgeschäden nach einer Störung deutlich reduziert werden.
In einer weiteren vorteilhaften Ausführungsform ist eine Einrichtung zur Ermittlung des Gesamtstromes zur Limitierung der Gesamtleistung des bürstenbehafteten DC Motors innerhalb des Elektrorollstuhlantriebs vorgesehen. Die Ströme der einzelnen Leistungsstufen können dazu auch separat gemessen und summiert werden. Dadurch wird eine Überbelastung des DC Motors im Ganzen oder auch in Teilen auch bei der erfindungsgemäßen Verwendung mehrerer Leistungsstufen vermieden.

Zur weiteren Kontrolle und Überwachung des DC Motors dienen erfindungsgemäß bevorzugt eingesetzte Spannungs-Messstellen zur Messung der Klemmspannung des jeweiligen Polpaares. Besonders vorteilhaft sind Einrichtungen zur Ermittlung einer rechnerischen Drehgeschwindigkeit zur Regelung der Motordrehzahl. Dadurch kann eine, vom Rollstuhlfahrer gewünschte Geschwindigkeit eingehalten und angezeigt werden.

Vorteilhaft ist die Messung der Klemmenspannung an nicht Strom führenden Bürsten zur Ermittlung des Drehzahlistwertes. Dies ermöglicht eine Drehzahlregelung ohne weitere Sensoren.

Besonders bevorzugt ist die erfindungsgemäße Verwendung einer Steuerung für den Elektrorollstuhlantrieb, welche alternativ zwei unabhängige bürstenbehaftete DC Motoren betreiben kann. In Abwandlung einer solchen universellen Steuerung, z.B. durch Parametrierung, können anstelle von zwei Motoren erfindungsgemäß bevorzugt die beiden Polpaare eines vierpoligen DC Motors betrieben werden. Alle weiteren Einrichtungen der Steuerung (Ansteuerung der Federdruckbremse, Ansteuerung einer Fahrzeugbeleuchtung usw.) können unverändert weiter verwendet werden. Besonderer Vorteil der Steuerung, welche alternativ zwei unabhängige bürstenbehaftete DC Motoren betreiben kann, ist die mögliche Verwendung erprobter, konventioneller Steckverbindungen anstelle teurer Speziallösungen. Somit minimiert sich der Aufwand für die Anpassung bestehender Steuerdesigns an den erfindungsgemäßen Elektrorollstuhlantrieb.

Besonders in Elektrorollstühlen zeigt sich die erfindungsgemäße Notlaufeigenschaft durch die Verwendung mehrerer Leistungsstufen als besonders Vorteilhaft. Das Risiko eines bewegungsunfähigen Rollstuhls wird minimiert. Aus der erfindungsgemäßen Messung der Drehgeschwindigkeit des DC Motors resultiert die Möglichkeit die Geschwindigkeit des Rollstuhls zu kontrollieren bzw. zu limitieren. Dies kann besonders bei der Nutzung des Fahrzeuges durch eine behinderte Person von großem Vorteil sein.

Der Begriff Elektrorollstuhl im Rahmen dieser Erfindung umfasst neben Elektrorollstuhl auch rollstuhlähnliche Elektromobile für gehbehinderte Personen.

Nachfolgend wird ein bevorzugtes Ausführungsbeispiel der Erfindung unter Bezugnahme auf die Zeichnung beschrieben. In der Zeichnung ist:

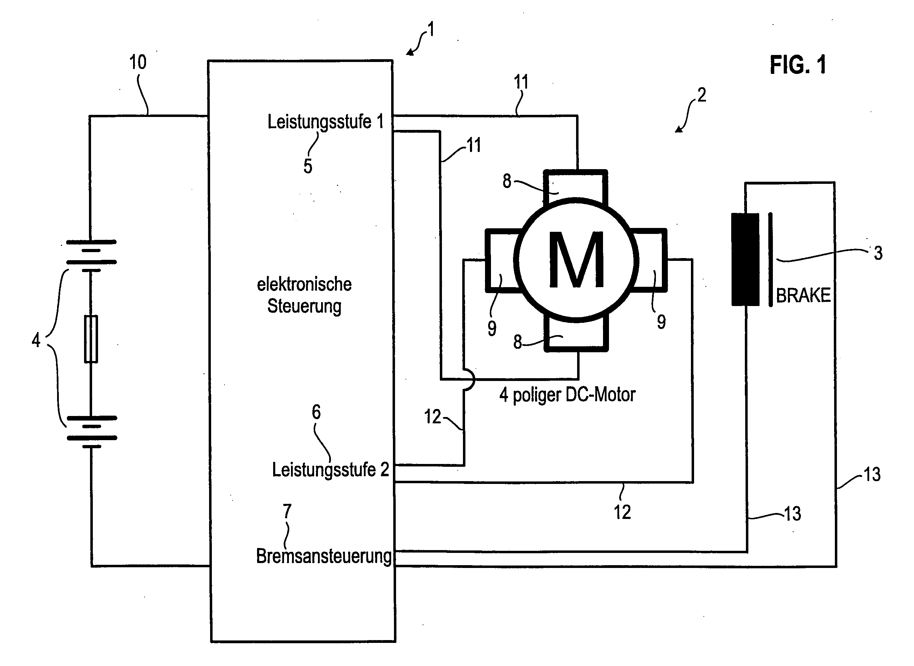

- Fig. 1: eine Prinzipdarstellung eines vierpoligen bürstenbehafteten DC Motors an einer 2-kanaligen Steuerung.

Nachfolgend wird unter Bezugnahme auf Fig. 1 ein Elektrorollstuhlantrieb 1 gemäß einem Ausführungsbeispiel der Erfindung beschrieben.

Fig. 1 zeigt als Ausführungsbeispiel den erfindungsgemäßen Aufbau eines Elektrorollstuhlantriebs 1 mit zwei Leistungsstufen 5, 6, einer Batterie 4, einem vierpoligen DC (Gleichstrommotor) Motor 2 und einer Federdruckbremse 3 sowie einer Bremssteuerung 7 der Federdruckbremse 3.

Die Leistungsstufen 5, 6 sowie die Bremssteuerung 7 sind über die Leitungen 10 mit der Batterie 4 verbunden. Für den Fachmann nahe liegend ist hier die Verwendung jeglicher Batterie- bzw. Akkumulatorenarten.

Desweiteren ist die erste Leistungsstufe 5 über die elektrischen Leitungen 11 sowie über Bürsten am Motor 2 mit dem ersten Polpaar 8 des Motors 2 verbunden. Ähnlich hierzu, ist die zweite Leistungsstufe 6 über die elektrischen Leitungen 12 sowie über Bürsten am Motor 2 mit dem zweiten Polpaar 9 des Motors 2 verbunden.

Die Energie der Batterie 4 kann somit entweder über beide Leistungsstufen 5,6 oder nur über eine der beiden Leistungsstufen 5, 6 den Motor 2 antreiben. Erfindungsgemäß vorgesehen ist sowohl die Verwendung von stufenlos als auch nicht stufenlos regelbaren Leistungsstufen. Eine Notlaufeigenschaft des Elektrorollstuhlantriebs 1 ergibt sich aus der Möglichkeit, den Motor 2 auch nur mit einer der beiden Leistungsstufen 5,6 betreiben zu können. Des Weiteren reduziert sich die Verlustleistung pro Leitung, da die Gesamtstrombelastung auf Leitung 11 und Leitung 12 aufgeteilt wird.

Die Ansteuerung der Federdruckbremse 3 über die Leitung 13 und die Bremsansteuerung 7 wird ermöglicht, durch die erfindungsgemäße Verwendung einer Steuerung, welche alternativ zwei unabhängige bürstenbehaftete DC Motoren betreiben kann.

Durch anschließen einer solchen Steuerung an nur einen Motor 2 jedoch mit zwei Polpaaren 8,9 kann eine bestehende Bremsansteuerung 7 weiterverwendet werden.

### Bezugszeichenliste

- 1: Elektrorollstuhlantrieb
- 2: Vierpoliger DC Motor
- 3: elektromechanische Federdruckbremse
- 4: Batterie
- 5: Erste Leistungsstufe
- 6: Zweite Leistungsstufe
- 7: Bremssteuerung
- 8: Erstes Polpaar
- 9: Zweites Polpaar
- 10-13: elektrische Leitungen

## Patentansprüche

1. Elektrorollstuhlantrieb (1) mit einem bürstenbehafteten DC Motor (2), wobei der bürstenbehaftete DC Motor (2) mindestens vier Pole aufweist, **dadurch gekennzeichnet, dass** mindestens zwei Polpaare (8, 9) des bürstenbehafteten DC Motors (2) dauerhaft an je einer unabhängigen Leistungsstufe (5, 6) betrieben werden.

2. Elektrorollstuhlantrieb nach Anspruch 1, **dadurch gekennzeichnet, dass** zumindest für die zwei Polpaare (8, 9) je eine Strom-Messstelle zur Regelung bzw. Limitierung der jeweiligen Phasenströme vorgesehen ist.

3. Elektrorollstuhlantrieb nach Anspruch 1 oder 2, **dadurch gekennzeichnet, dass** eine Einrichtung zur Erkennung und Auswertung einer Kurzschlusssituation an den Leitungen (11, 12) oder am Motor (2) vorgesehen ist.

4. Elektrorollstuhlantrieb nach einem der Ansprüche 1 bis 3, **dadurch gekennzeichnet, dass** eine Einrichtung zur Ermittlung des Gesamtstromes zur Limitierung der Gesamtleistung des bürstenbehafteten DC Motors (2) vorgesehen ist.

5. Elektrorollstuhlantrieb nach einem der Ansprüche 1 bis 4, **dadurch gekennzeichnet, dass** zumindest eine Spannungsmessstelle für die Leistungsstufen (5, 6) zur Messung der Klemmspannung des jeweiligen Polpaares (8, 9) vorgesehen ist.

6. Elektrorollstuhlantrieb nach Anspruch 5, **dadurch gekennzeichnet, dass** eine Einrichtung zur Ermittlung einer rechnerischen Drehgeschwindigkeit zur Regelung der Motordrehzahl vorgesehen ist.

7. Elektrorollstuhlantrieb nach einem der Ansprüche 1 bis 6, **dadurch gekennzeichnet, dass** eine den Leistungsstufen (5, 6) für die zwei Polpaare (8, 9) übergeordnete Steuerung verwendet wird, welche alternativ zwei unabhängige bürstenbehaftete DC Motoren betreiben kann.
